# EUROPÄISCHE PATENTSCHRIFT

(11) **EP 0 634 760 B1**
(45) Veröffentlichungstag und Bekanntmachung des Hinweises auf die Patenterteilung: **13.03.1996**
(21) Anmeldenummer: 94110109.9
(22) Anmeldetag: 29.06.1994
(51) Int. Cl.: H01G 2/18

(54) **Elektrischer Kondensator mit Uberdruckschutz**
Electrical capacitor with overpressure protection
Condensateur électrique avec protection contre la surpression

(30) Priorität: 16.07.1993 DE 4323930
(43) Veröffentlichungstag der Anmeldung: 18.01.1995
(73) Patentinhaber: SIEMENS MATSUSHITA COMPONENTS GmbH & CO KG, D-81617 München (DE)
(72) Erfinder: Utner, Ferdinand, D-93049 Regensburg (DE); Vetter, Harald, Dipl.-Ing., D-89520 Heidenheim (DE)
(74) Vertreter: Fuchs, Franz-Josef, Dr.-Ing.

(56) Entgegenhaltungen:
- EP-A- 0 132 634
- EP-A- 0 548 713

## Beschreibung

Die Erfindung betrifft einen elektrischen Kondensator mit einem Wichelstapel, der in ein, insbesondere metallisches, Gehäuse eingebaut ist, das eine Abschaltsicherung aufweist, die den Kondensator bei einem Druckanstieg im Gehäuse von einem äußeren Stromkreis freischaltet, indem eine im Inneren des Gehäuses angeordnete metallische Leitung an einer Soll-Trennstelle aufgetrennt wird und bei dem zur Unterstützung der Abschalthäfte die Abschaltsicherung durch einvorgespanntes Federelement über ein druckabhängiges Triebelement vorgespannt ist, das aus einer Membran besteht.

Ein derartiger Kondensator ist aus der DE 41 42 467 A1 bekannt. Hierbei wird ein metallische Leiter im Bereich der Soll-Trennstelle zwischen zwei Teilen gehaltert, die bei einem Druckanstieg im Gehäuse eine Relativbewegung gegeneinander ausführen, so daß die metallische Leitung an der Soll-Trennstelle durchtrennt wird.

Obgleich das bekannte Sicherungssystem ein sicheres Abschalten ermöglicht, wird durch die dort vorgeschlagene Konstruktion durch die Länge der erforderlichen Zuleitungen die Gesamtinduktivität des Kondensators erhöht, was für bestimmte Anwendungsfälle nicht erwünscht ist. Weiterhin läßt die bekannte Konstruktion keine hohen Impulsströme, die bei verschiedenen Anwendungsfällen auftreten können, zu.

Aufgabe der vorliegenden Erfindung ist es daher, einen elektrischen Kondensator mit Abschaltsicherung anzugeben, die bei relativ niederen Überdrücken im Kondensatorgehäuse ein sicheres Abschalten des Kondensators gewährleistet, eine Wiederkontaktierung der unterbrochenen Leitung bei Abbau des inneren Überdrucks nicht zuläßt, die Kondensator-Induktivität nicht wesentlich erhöht, hohe Impulsströme zuläßt, geringe Abmessungen (vor allem in Richtung Kondensator-Höhe) aufweist und auch bei Kondensatoren mit mehr als zwei Anschlüssen bzw. Durchführungen (z. B. Abgleichkondensatoren oder Serienschaltung mit Mittelzapfung) eingebaut werden kann.

Diese Aufgabe wird erfindungsgemäß dadurch gelöst, daß die Membran an einer Bodenplatte befestigt ist, die auf der oberen Fläche des Wichelstapels aufliegt und die elektrisch mit einer Elektrode des Kondensators verbunden ist, daß die Abschaltsicherung in einem Anschlußbolzen angeordnet ist, der einen äußeren Anschluß des Kondensators bildet, und daß das vorgespannte Federelement zentrisch um die Soll-Trennstelle angeordnet ist.

Vorteilhaft ist es, wenn die Federn in einem Gehäuse mit geschlitztem Boden untergebracht sind.

Zweckmäßigerweise erfolgt die Vorspannung der Federn, Federscheiben oder dgl. mittels einer Einstellmutter, während die Abschaltsicherung oder das druckabhängige Triebelement (Membran) mittels einer weiteren Einstellmutter am Bolzenende aktiviert werden kann.

Ferner ist es vorteilhaft, parallel zum Sicherungsquerschnitt und/oder zur Membran zumindest einen elektrischen Nebenschluß anzuordnen.

Die Erfindung wird anhand der in den Figuren dargestellten Ausführungsbeispielen erläutert.

Dabei zeigen
FIG 1 und 2 eine Abschaltsicherung im ein- bzw. abgeschalte ten Zustand,
FIG 3 eine Vergrößerung aus FIG 1,
FIG 4 und 5 weitere Ausführungsformen und
FIG 6 bis 8 einzelne Federscheiben.

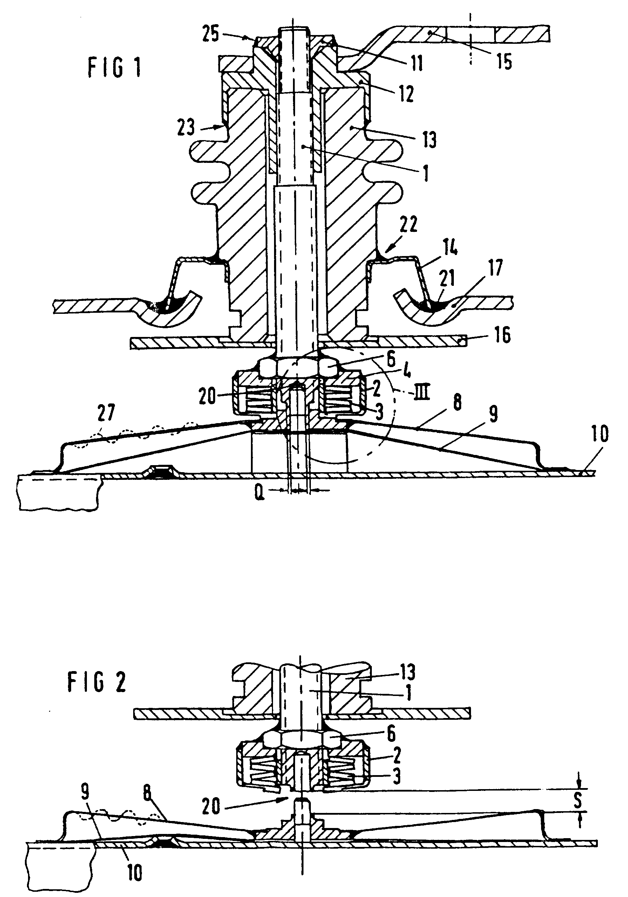

FIG 1 zeigt einen Anschlußbolzen 1, der als äußere Stromzuführung für einen Kondensator dient. Der Anschlußbolzen 1 ist in einer Keramikdurchfuhrung 13 angeordnet, die über einen Adapter 14 im Deckel 17 eines Kondensators mittels einer Lötung 21 befestigt ist. Der Adapter 14 ist andererseits mittels der Lötstelle 22 mit der Keramikdurchführung verbunden. Am oberen Ende der Keramikdurchführung 13 ist eine Kappe 12 an der Stelle 23 angelötet, die mit einem Anschlußflansch 15 verbunden ist.

Im Inneren des Gehäuses ist an der Keramikdurchführung 13 einer Isolationsplatte 16 angeordnet, die auch zur Abschottung von Lötresten dient.

Im Anschlußbolzen 1 ist eine Soll-Trennstelle 20 mit kreisringförmigem Sicherungsquerschnitt Q angeordnet.

Das als Druckdose ausgebildete druckabhängige Triebelement besteht aus einer Membran 8, die auf eine Bodenplatte 10 dicht aufgelötet ist. Die Bodenplatte 10 liegt dabei auf der oberen Fläche des Wickelstapels der Kondensatoren auf und ist gleichzeitig mit einem Pol des Wickelstapels elektrisch verbunden. Andererseits ist die Membran 8 mit dem Flansch des Anschlußbolzens 1 verlötet.

Der Sicherungsquerschnitt Q, der im unteren Teil des Anschlußbolzens 1 angeordneten Soll-Trennstelle 20 hat einen Richtwert von ca. 8 % des Anschlußbolzenquerschnitts.

Da bei dem vorgesehenen Abschaltdruck (ca. 1,5 bar Überdruck) die für die Unterbrechung der Soll-Trennstelle 20 benötigte Axialkraft (ca. 1300 N) nicht aufgebracht werden kann, werden die fehlenden Kräfte (ca. 1100 N) durch entsprechend vorgespannte Federn 3 erzeugt. Die zentrisch um die Soll-Trennstelle 20 angeordneten Federn 3 werden durch eine Einstellmutter 6 auf die jeweils erforderliche Kraft vorgespannt.

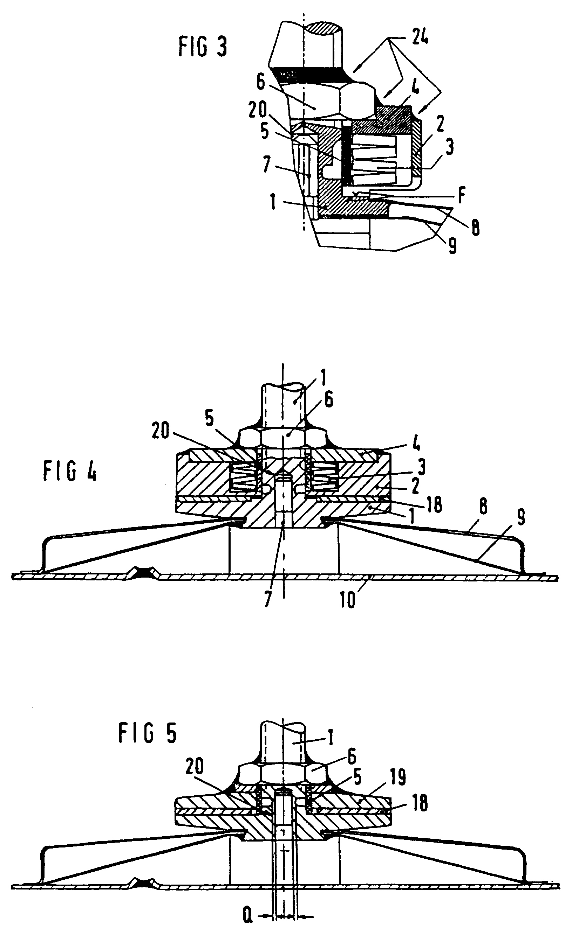

In der FIG 3, die eine Ausschnittsvergrößerung aus FIG 1 darstellt, ist die Anordnung der vorgespannten Federn 3 ersichtlich.

Das Federpaket 3 kann aus antimagnetischen Edelstahlfedern bestehen, es können aber auch Spiralfedern oder eine andere Federart gewählt werden.

Nach Anziehen der Einstellmuttern 6 bzw. 11 erfolgt eine Verlötung an den Lötstellen 24 bzw. 25.

Durch Anziehen einer weiteren Einstellmutter 11 auf Anschlag an die Kappe 12 entsteht ein Widerlager für die Abschaltsicherung. Dies bedeutet, daß die Sicherung aktiviert wird, so daß bei Druckbeaufschlagung der Membran 8 die entstehende Zugkraft auf die Solltrennstelle 20 wirken kann.

Die Größe des Sicherungsquerschnitts wird normalerweise auf den maximalen Nennstrom (z. B. 250 A) ausgelegt, wobei sich auch ein dem Querschnitt entsprechend zulässiger Impulsstrom (z .B. 60 kA) ergibt.

Damit die Abschaltsicherung aber auch mit wesentlich höheren Impulsströmen beaufschlagt werden kann, ist parallel zur Soll-Trennstelle 20 ein elektrischer Nebenschluß gelegt, welcher beim Ansprechen der Abschaltsicherung mit unterbrochen werden muß.

Damit dies ermöglicht wird, muß eine Stelle im Verlauf des Nebenschlusses als Druckkontakt ausgeführt werden. Der komplette Nebenschluß besteht aus einem metallischen Federgehäuse 2 mit geschlitztem Boden und einer Druckplatte 4, sowie den zwischen den Boden des Federgehäuses 2 und dem Flansch des Anschlußbolzens 1 angeordnete Druckkontakt mit der Kontaktfläche F.

Die notwendige Druckkraft wird hierbei durch den Federsatz 3 erzeugt. Der Boden des Federgehäuses 2 ist geschlitzt segmentiert um einen für die Übertragung hoher Ströme günstigeren, aus Einzelkontakten (z. B. 12) bestehenden besseren Druckkontakt zu erhalten. Der resultierende Serienwiderstand R_{S} errechnet sich aus R_{S} = R_{K}.1/n (R_{K} Widerstandkontaktstelle; n Anzahl Kontakte).

Das Federpaket 3 ist gegenüber dem Anschlußbolzen 1 durch ein Isolierröhrchen 5 beabstandet, während die Solltrenn20 durch einen Kunststoffstift 7 mechanisch stabilisiert ist.

Da durch die relativ dünne Membran 8 der Querschnitt im Übergang zum Flansch des Anschlußbolzens 1 querschnittsmäßig ebenfalls eine Stromengstelle bildet, sind in der Druckdose parallel zur Membran 8 strahlenförmig mehrere (z. B. 6 bis 8) Kupfer-Folienbänder 9 als Nebenschluß eingelötet.

Neben den Kupferfolienbändern 9 sind als Nebenschluß auch andere Ausgestaltungen möglich, z. B. eine Ausbildung mit einer flexiblen Litze.

In der FIG 2 ist der Zustand dargestellt, der nach Ansprechen der Abschaltsicherung, d. h. nach Durchtrennen der Solltrennstelle 20 herrscht. Durch die Membran 8 ist der abgerissene Teil des Anschlußbolzens 1 nach unten gedrückt, so daß sich die Strecke S ergibt, die den Abschaltweg, bzw. die Luftstrecke nach dem Abschaltvorgang bildet.

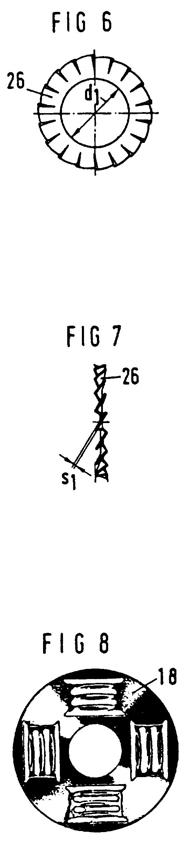

Um den Bereich des Druckkontaktes für eine Beaufschlagung mit sehr hohen Impulsströmen (z. B. > 100 kA) geeignet zu machen, müssen die Kontaktflächen zum einen sehr glatt (z. B. Rauhtiefe < 0,8 µm) und versilbert sein und zum anderen die Kontaktierung über möglichst viele, einzeln abgefederte, Einzelkontakte (z. B. 18 bis 30) aufgebracht werden. Dies kann erreicht werden, indem zwischen den Kontaktflächen des Federgehäuses 2 und dem Flansch des Anschlußbolzens 1 (bzw. dem Membrankontaktteller) eine aus mehreren Kontaktlamellen bestehende und für diese Anwendungen zugeschnittene Multikontaktscheibe 18 (s. FIG 8) eine Fächerscheibe 26 mit z.B. 30 federnden Zähnen (s. FIG 6 und 7) oder eine andere entsprechend ausgestaltete Federscheibe beigelegt wird (siehe FIG 4).

Reichen die durch solch eine Scheibe 18 bzw. 26 erzielten Kontaktkräfte und Federwege auch für eine Vorspannung der Solltrennstelle 20 aus, dann kann das Federpaket 3 entfallen und anstatt des Federgehäuses eine einfache Druckplatte 19 verwendet werden (siehe FIG 5).

Um eine definierte Verformung zu fördern und die notwendige Schaltkraft zu reduzieren, kann die Membran 8 mit umlaufenden Rillen 27 (in der FIG 1 gestrichelt dargestellt) versehen werden.

## Patentansprüche

1. Elektrischer Kondensator mit einem Wichelstapel, der in ein, insbesondere metallisches, Gehäuse eingebaut ist, das eine Abschaltsicherung aufweist, die den Kondensator bei einem Druckanstieg im Gehäuse von einem äußeren Stromkreis freischaltet, indem eine im Inneren des Gehäuses angeordnete metallische Leitung an einer Soll-Trennstelle (20) aufgetrennt wird, und bei dem zur Unterstützung der Abschaltkräfte die Abschaltsicherung durch einvorgespanntes Federelement (3) über ein druckabhängiges Triebelement vorgespannt ist, das aus einer Membran (8) besteht,
**dadurch gekennzeichnet,** daß die Membran (8) an einer Bodenplatte (10) befestigt ist, die auf der oberen Fläche des Wichelstapels aufliegt und die elektrisch mit einer Elektrode des Kondensators verbunden ist, daß die Solltrennstelle (20) in einem Anschlußbolzen (1) angeordnet ist, der einen äußeren Anschluß des Kondensators bildet, und daß das vorgespannte Federelement (3; 18, 26) zentrisch um die Soll-Trennstelle (20) angeordnet ist.

2. Elektrischer Kondensator nach Anspruch 1,
**dadurch gekennzeichnet,** daß das Federelement eine Feder (3) ist, die in einem Gehäuse (2) mit geschlitztem Boden angeordnet sind.

3. Elektrischer Kondensator nach Anspruch 1 oder 2,
**dadurch gekennzeichnet,**
daß die Vorspannung des Federelements (3; 18, 26) mittels einer Einstellmutter (6) erfolgt.

4. Elektrischer Kondensator nach einem der Ansprüche 1 bis 3,
**dadurch gekennzeichnet,**
daß die Abschaltsicherung oder das druckabhängige Triebelement mittels einer weiteren Einstellmutter (11) am Bolzenende akitiviert wird.

5. Elektrischer Kondensator nach einem der Ansprüche 1 bis 4,
**dadurch gekennzeichnet,**
daß parallel zum Sicherungsquerschnitt (Q) zumindest ein elektrischer Nebenschluß (2;4) angeordnet ist.

6. Elektrischer Kondensator nach einem der Ansprüche 1 bis 5,
**dadurch gekennzeichnet,**
daß parallel zur Membran ein Nebenschluß (9) angeordnet ist.

## Claims

1. Electric capacitor which has an element stack and is built into a container, in particular made of metal, which has a safety disconnection device which in the event of a pressure rise in the container isolates the capacitor from an external circuit by virtue of the fact that a metallic conductor arranged in the interior of the container is interrupted at a design isolating point (20), and in which for the purpose of supporting the disconnection forces the safety disconnection device is preloaded by a preloaded spring element (3) via a pressure-dependent drive element which comprises a diaphragm (8), characterized in that the diaphragm (8) is mounted on a base plate (10) which rests on the upper surface of the element stack and which is connected electrically to an electrode of the capacitor, in that the design isolating point (20) is arranged in a terminal stud (1) which forms an external connection of the capacitor, and in that the preloaded spring element (3; 18, 26) is arranged centrally around the design isolating point (20).

2. Electric capacitor according to Claim 1, characterized in that the spring element is a spring (3) which is arranged in a housing (2) having a slotted floor.

3. Electric capacitor according to Claim 1 or 2, characterized in that the preloading of the spring element (3; 18, 26) is performed by means of an adjusting nut (6).

4. Electric capacitor according to one of Claims 1 to 3, characterized in that the safety disconnection device or the pressure-dependent drive element is activated by means of a further adjusting nut (11) on the stud end.

5. Electric capacitor according to one of Claims 1 to 4, characterized in that at least one electric shunt (2, 4) is arranged in parallel with the safety device cross-section (Q).

6. Electric capacitor according to one of Claims 1 to 5, characterized in that a shunt (9) is arranged in parallel with the diaphragm.

## Revendications

1. Condensateur électrique comportant un empilage d'enroulements et qui est logé dans un boîtier, notamment métallique, qui comporte un coupe-circuit, qui déconnecte le condensateur d'un circuit extérieur dans le cas d'une augmentation de pression dans le boîtier, par le fait qu'un conducteur métallique disposé à l'intérieur du boîtier est rompu en un point (20) où a lieu la rupture, et dans lequel, pour aider les forces de déconnexion, le coupe-circuit est précontraint par un élément élastique (3) précontraint, par l'intermédiaire d'un élément d'entraînement qui agit en fonction de la pression et qui est constitué d'une membrane
(8), caractérisé par le fait
que la membrane (8) est fixée à une plaque de fond (10), qui s'applique à la surface supérieure de l'empilage d'enroulements et est reliée électriquement à une électrode du condensateur, le point où a lieu la rupture (20) est disposé dans un boulon de raccordement (1) , qui forme une borne extérieure du condensateur et l'élément (3;18,26) élastique précontraint est disposé d'une manière centrée autour du point (20) où a lieu la rupture.

2. Condensateur électrique suivant la revendication 1, caractérisé par le fait que l'élément élastique est un ressort (3), qui est disposé dans un boîtier (2) comportant un fond fendu.

3. Condensateur électrique suivant la revendication 1 ou 2, caractérisé par le fait que la précontrainte de l'élément élastique (3;18,26) s'effectue à l'aide d'un écrou de réglage (6).

4. Condensateur électrique suivant l'une des revendications 1 à 3, caractérisé par le fait que le coupe-circuit ou l'élément d'entraînement, qui agit en fonction de la pression, est activé au moyen d'un autre écrou de réglage (11) sur l'extrémité du boulon.

5. Condensateur électrique suivant l'une des revendications 1 à 4, caractérisé par le fait qu'au moins une dérivation électrique (2,4) est montée en parallèle avec la section transversale (Q) du coupe-circuit.

6. Condensateur électrique suivant l'une des revendications 1 à 5, caractérisé par le fait qu'une dérivation (9) est montée en parallèle avec la membrane.
